# Europäisches Patentamt

# European Patent Office

# Office européen des brevets

(19)

(11) Veröffentlichungsnummer : **0 131 537**
**B1**

(12)

# EUROPÄISCHE PATENTSCHRIFT

(45) Veröffentlichungstag der Patentschrift :
30.09.87

(51) Int. Cl.⁴ : **G 01 B  5/20, G 01 B  7/28**

(21) Anmeldenummer : 84710020.3

(22) Anmeldetag : 08.06.84

(54) Vorrichtung zur Messung eines Zahnprofils.

(30) Priorität : 09.06.83 DE 3320905

(43) Veröffentlichungstag der Anmeldung :
16.01.85 Patentblatt 85/03

(45) Bekanntmachung des Hinweises auf die Patenterteilung : 30.09.87 Patentblatt 87/40

(84) Benannte Vertragsstaaten :
CH FR IT LI

(56) Entgegenhaltungen :
EP-A- 0 026 858
DE-A- 2 333 502
DE-A- 3 125 693
Die Akte enthält technische Angaben, die nach dem
Eingang der Anmeldung eingereicht wurden und die
nicht in dieser Patentschrift enthalten sind.

(73) Patentinhaber : BHS-Höfler Maschinenbau GmbH
Industriestrasse 19
D-7505 Ettlingen-Oberweier (DE)

(72) Erfinder : van de Löcht, Heinrich, Dr.-Ing.
Karlsruher Strasse 104
D-7552 Muggensturm (DE)

(74) Vertreter : Eder, Eugen, Dipl.-Ing. et al
Patentanwälte Dipl.-Ing. E. Eder Dipl.-Ing. K. Schieschke Elisabethstrasse 34
D-8000 München 40 (DE)

EP 0 131 537 B1

**0 131 537**

**Beschreibung**

Die Erfindung bezieht sich auf ein Zahnprofilmeßgerät nach dem Oberbegriff des Patentanspruchs.

Als Stand der Technik wird hierbei von einem Zahnprofilmeßgerät ausgegangen, bei welchem der Meßtaster auf einer gradlinigen Bahn relativ zum feststehenden Zahnrad gefürht ist (DE-A-2 333 502). Ein Nachteil dieses konventionellen Meßverfahrens ergibt sich beim Prüfen von Zahnrädern mit großem Durchmesser, da hier der Meßtaster eine von der Radmitte verschobene Startposition einnehmen muß. Daraus resultiert eine Meßunsicherheit.

Zum allgemein bekannten Stand der Technik zählt weiterhin bereits die lineare Verschiebung eines Meßtasters vom Fußkreis bis zum Kopfkreis eines zu prüfenden Zahnrades. Nachteilig sind hierbei ebenfalls die langen Wege und die dazu erforderlichen langen Schlittenführungen.

Weiterhin sind bewegliche Profilmeßgeräte bekannt, bei welchen die Zahnformabweichungen näherungsweise berechnet werden. Damit ergibt sich eine Meßunsicherheit und Ungenauigkeit (DE-A-3 125 693).

Aufgabe der vorliegenden Erfindung ist es demgegenüber, ein Zahnprofilmeßgerät nach dem Oberbegriff des Patentanspruchs zu schaffen, bei welchem eine möglichst genaue Messung auf einfache Weise durchführbar ist.

Diese Aufgabe wird mit den Merkmalen des Patentanspruchs gelöst. Hierbei findet vorzugsweise ein Meßtaster Anwendung, welcher auf einem Schlitten angeordnet ist; dieser Schlitten koppelt zwei Bewegungen des Meßkopfes, d. h. des Meßtasters, nämlich Rotation und Translation. Damit ergibt sich vorteilhafterweise, daß eine sehr genaue Messung von Zahnprofilen durchführbar ist. Weiterhin können die Schlittenführungen infolge von Rotation und Translation im wesentlichen kürzer ausgebildet sein. Das Meßprinzip mit nicht linearer Eingriffslinie läßt sich demnach über eine kompakte Feinmechanik besonders vorteilhaft verwirklichen.

Die Erfindung wird nachfolgend anhand eines in der Zeichnung dargestellten Ausführungsbeispiels näher beschrieben. In der Zeichnung zeigen:

Figur 1 eine nicht lineare Eingriffslinie E bezüglich eines zu messenden Zahnprofils;

Figur 2 eine schematische perspektivische Ansicht eines Zahnprofilmeßgerätes;

Figur 3 einen Meßkopf K des Zahnprofilmeßgerätes.

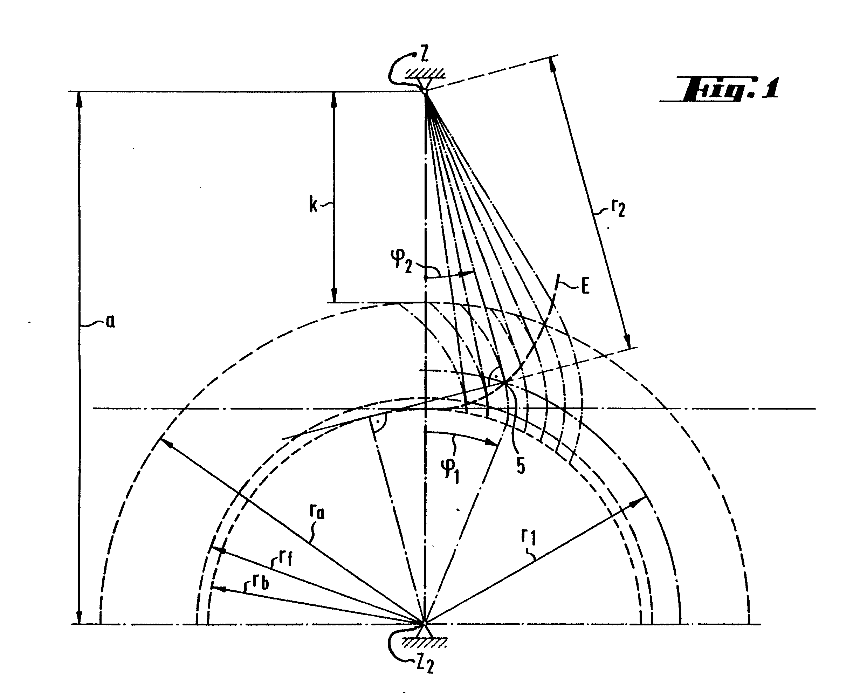

In Figur 1 ist die Eingriffslinie E dargestellt, welche der Meßtaster 5 beim Prüfen des sich drehenden Zahnprofiles abtastet. Das Verfahren mit der Vorrichtung gemäß der Erfindung wird im folgenden am Beispiel einer Evolventenverzahnung erläutert. Gemäß Figur 1 wird die nicht lineare Eingriffslinie E in Bezug auf den Drehpol Z des Meßkopfes durch die Polarkoordinaten $r_2$ und $\varphi_2$ definiert.

Bezogen auf den Drehpol $Z_2$ des Zahnprofils sind es die Koordinaten $\varphi_1$ und $r_1$ sowie die theoretische Evolventenfunktion.

Weiterhin ist Figur 1 zu entnehmen, daß die Normale an die Evolvente an beliebiger Stelle der Eingriffslinie den Grundkreis $r_b$ tangiert: Der Meßtaster ist also stets normal zum theoretischen Zahnprofil geführt.

Der funktionelle Zusammenhang zwischen dem Drehwinkel $\varphi_1$ und $\varphi_2$ läßt sich folgendermaßen darstellen:

$$\varphi_1 = (180°/\pi) \cdot (a/r_b) \cdot \sin \varphi_2 - \varphi_2 \tag{1}$$

Der Abstand $r_2$ vom Drehpol Z zum momentanen Berührpunkt auf der Evolvente beträgt:

$$r_2 (\varphi_2) = a \cdot \cos \varphi_2 - r_b \tag{2}$$

mit:

$a$ = Abstand der beiden Drehpole Z und $Z_2$ (Achsabstand)
$r_b$ = Grundkreisradius
$\varphi_1$ = Drehwinkel der Polarkoordinate $r_1$ bzw. des Prüflings
$\varphi_2$ = Drehwinkel der Polarkoordinate $r_2$ bzw. der Meßeinrichtung

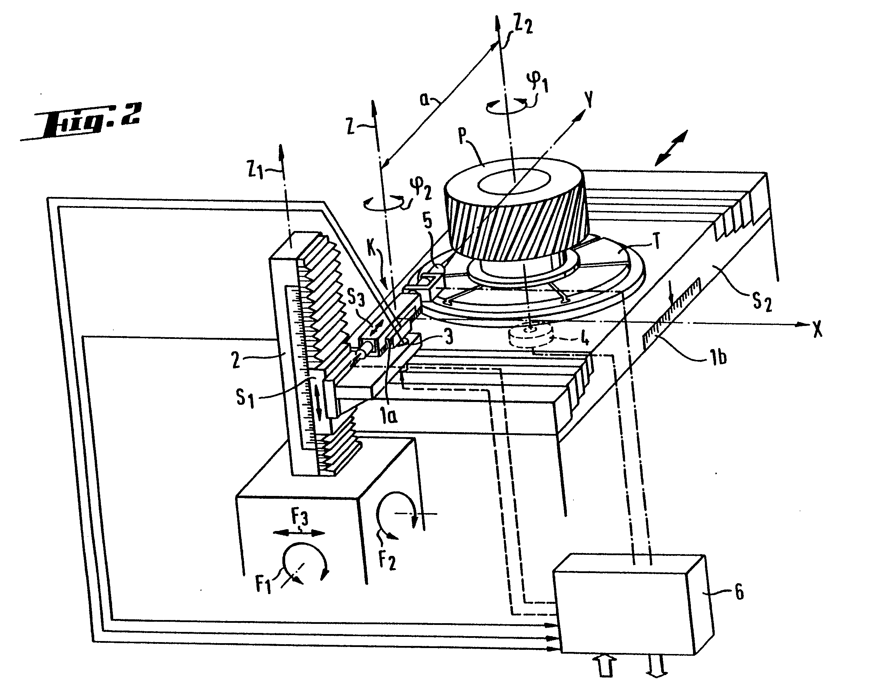

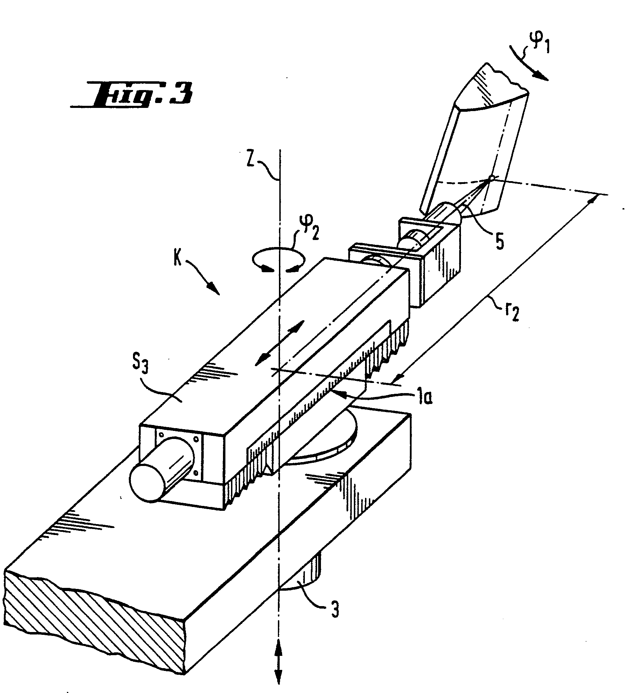

Ein praktisches Ausführungsbeispiel zum vorgenannten Meßverfahren zeigt Fig. 2. Der in Fig. 3 vergrößert dargestellte Meßkopf K ist auf einem in Z-Richtung verfahrbaren Schlitten $S_1$ aufgesetzt. Hierdurch können beliebige Stirnschnittebenen eines zu prüfenden Zahnrades P, im vorliegenden Fall ein Evolventenzahnrad, angefahren werden.

Wie aus Fig. 2 bzw. Fig. 3 hervorgeht, besteht der Meßkopf K im wesentlichen aus einem um die Z-Achse schwenkbar gelagerten Schlitten $S_3$, sowie den beiden Meßsystemen 1a und 3 zur Bestimmung der Lagekoordinaten $r_2$ und $\varphi_2$ des Meßtasters 5.

Zur Aufnahme des Zahnrades P dient der um die $Z_2$-Achse drehbar gelagerte Drehtisch T. Sein Drehwinkel $\varphi_1$ wird über das Winkelmeßsystem 4 erfaßt. Über den in Y-Richtung positionierbaren Werkstückschlitten $S_2$ läßt sich entsprechend dem Zahnraddurchmesser der Achsabstand einstellen.

2

Der aktuelle Achsabstand wird über das Wegmeßsystem 1b erfaßt.

Vor jedem Meßvorgang werden die beiden Achsen $Z_1$ und $Z_2$ über Meß- und Stellglieder räumlich parallel ausgerichtet. Die hierzu notwendigen Freiheitsgrade sind mit $F_1 \ldots F_3$ gekennzeichnet. Die gleichen Parallelitätsanforderungen gelten für die beiden Achsen Z und $Z_1$.

Zum Einrichten des Meßkopfes K ist die Nullage des Drehwinkels $\varphi_1$ zu bestimmen. Sie ist definiert durch die theoretische Verbindungslinie zwischen den Drehachsen Z und $Z_2$. Die Messung von rechter bzw. linker Flanke läuft symmetrisch zu dieser Linie ab, wobei sich nur die Vorzeichen für die Drehwinkel umkehren.

Zur Vorbereitung der Profilmessung müssen zunächst die Koordinaten der Startposition des Meßkopfes K gemäß folgendem Formelsatz berechnet werden :

$$\varphi_{2\ \text{Start}} = \text{arc sin } r_f^2 - r_b^2/a \qquad (3)$$

$$r_{2\ \text{Start}} = a \cdot \cos \varphi_{2\ \text{Start}} - r_b \qquad (4)$$

mit

$r_f$ = Evolventenfußkreisradius (bzw. gewünschter Radius am Werkstück bei Beginn der Evolventenmessung)

a  = Achsabstand

$r_b$ = Grundkreisradius

Die berechneten Startkoordinaten werden dem Lagerregelkreis des Meßkopfes K als Sollwerte vorgegeben. Über die servoelektrisch gesteuerten Antriebe des Meßkopfes K wird der Meßtaster 5 danach auf die theoretische Eingriffslinie E entsprechend positioniert. Hierbei ist vorausgesetzt, daß sich der Taster 5 in einer Zahnlücke befindet und nicht mit der Zahnflanke kollidiert. Anschließend wird das Zahnrad P um seine Drehachse $Z_2$ gegen den Meßtaster gedreht, bis Berührung erfolgt, und der Startwinkel $\varphi_{1\ \text{Start}}$ des Werkstückes definiert über :

$$\varphi_{1\ \text{Start}} = (180°/\pi) \cdot (a/r_b) \cdot \sin \varphi_{2\ \text{Start}} - \varphi_{2\ \text{Start}}$$

Beim eigentlichen Meßvorgang dreht sich das Zahnrad kontinuierlich um die Tischachse $Z_2$, wobei der Meßkopf K bzw. der Meßtaster 5 entsprechend den Beziehungen (1) und (2) nachgeführt wird.

Abweichungen von der theoretischen Evolvente werden hierbei vom Meßtaster 5 erfaßt und können wie üblich in Form eines sogenannten Evolventendiagrammes ausgegeben werden.

Ein Grenzfall des vorgestellten Meßverfahrens liegt beim Vermessen von Zahnstangenprofilen vor. Hier wird die ansonsten nicht lineare Eingriffslinie zu einer Geraden und ist identisch mit dem Zahnprofil.

Der in Fig. 2 gezeigte Meßaufbau kann auch für Flankenlinienmessungen ohne Einschränkungen eingesetzt werden.

Wie aus Fig. 2 ersichtlich, stellen die Positionszahlen 1b die Zustellbewegung und 1a die Meßbewegung bezüglich des Wegmeßsystems Y dar. Die Positionszahl 2 betrifft das Wegmeßsystem Z, die Positionszahl 3 den Winkelgeber des Meßkopfes K, die Positionszahl 4 den Winkelgeber des Werkstükkes P. Hierbei sind die Winkelgeber 3 und 4 sowie die vorgenannten Wegmeßsysteme über die Steuer- und Auswerteinheit 6 miteinander verbunden, wobei der gesamte Meßvorgang von dem Winkelgeber 4 ausgelöst wird. In jedem Fall durchläuft hierbei der Meßtaster 5 eine Eingriffslinie E, welche gemäß Fig. 1 als nicht lineare Kurve ausgeführt ist. Damit ergibt sich auf einfache Weise eine erhebliche Verbesserung der Meßgenauigkeit eines Zahnprofils.

## Patentanspruch

Zahnprofilmeßgerät mit einem auf einem Schlitten ($S_3$) geführten, in einem Meßkopf (K) gelagerten Meßtaster (5), wobei der Meßkopf einen Winkelgeber (3) und ein Wegmeßsystem (1a) aufweist und mit einer Steuer- und Auswerteinheit (6) verbunden ist und wobei das zu prüfende Zahnrad (P) auf einem Drehtisch (T) angeordnet ist, dadurch gekennzeichnet, daß

a) der Abstand ($r_2$) des Meßtasters (5) in Abhängigkeit vom Drehwinkel ($\varphi_2$) um den Drehpol (Z) des Meßkopfes gemäß der Beziehung

$$r_2 (\varphi_2) = a \cdot \cos \varphi_2 - r_b$$

regelbar ist, wobei a der Abstand zwischen dem Drehpol (Z) des Meßkopfes und dem Drehpol ($Z_2$) des Zahnrades und $r_b$ der Grundkreisradius des Zahnrades ist,

b) der Drehwinkel ($\varphi_1$) des Drehtisches (T) über ein mit der Steuer- und Auswerteinheit (6) verbundenes Winkelmeßsystem (4) erfaßbar ist und

c) zwischen dem Drehwinkel ($\varphi_1$) des Zahnrades und dem Drehwinkel ($\varphi_2$) des Meßtasters (5) folgende Beziehung besteht :

**0 131 537**

$$\varphi_1 = (180/\pi) \cdot (a/r_b) \cdot \sin \varphi_2 - \varphi_2$$

**Claim**

Device for measuring tooth shapes comprising a measuring pin (5) being mounted in a measuring head (K) and guided on a slide $(S_3)$, said measuring head comprising a transmitting synchro (3) and a position transducer (1a) and being connected to a control and evaluation unit (6), with a toothed gear (P) to be tested being arranged on a rotating table (T), characterized in that

a) the distance $(r_2)$ of said measuring pin (5) as a function of the rotation angle $(\varphi_2)$ around the centre of revolution (Z) of said measuring head is controllable according to the relation

$$r_2 (\varphi_2) = a \cdot \cos \varphi_2 - r_b$$

with a being the distance between said centre of revolution (Z) of said measuring head and the centre of revolution $(Z_2)$ of said gear wheel and $r_b$ being the base circle radius,

b) the rotation angle $(\varphi_1)$ of said rotating table (T) can be determined by an angle measuring system (4) connected to said control and evaluation unit (6), and

c) the rotation angle $(\varphi_1)$ of said gear wheel and the rotation angle $(\varphi_2)$ of said measuring pin (5) have the following relation :

$$\varphi_1 = (180/\pi) \cdot (a/r_b) \cdot \sin \varphi_2 - \varphi_2$$

**Revendication**

Appareil de mesure du profil de dents comportant un palpeur de mesure (5) monté dans une tête de mesure (K), guidé sur un chariot $(S_3)$, où la tête de mesure présente un capteur angulaire (3) et un système de mesure de déplacement (1a) et est reliée à une unité de commande et d'exploitation (6) et où la roue dentée (P) à vérifier est disposée sur une table tournante (T), caractérisé en ce que :

a) la distance $(r_2)$ du palpeur de mesure (5) est réglable en fonction de l'angle de rotation $(\varphi_2)$ autour du pôle de rotation (Z) de la tête de mesure suivant la relation

$$r_2 (\varphi_2) = a \cdot \cos \varphi_2 - r_b$$

a étant la distance entre le pôle de rotation (Z) de la tête de mesure et le pôle de rotation $(Z_2)$ de la roue dentée et $r_b$ étant le rayon du cercle primitif de la roue dentée,

b) l'angle de rotation $(\varphi_1)$ de la table de rotation (T) peut être enregistré par un système de mesure angulaire lié à l'unité de commande et d'exploitation (6) et

c) l'angle de rotation $(\varphi_1)$ de la roue dentée et l'angle de rotation $(\varphi_2)$ du palpeur de mesure (5) étant liés par la relation suivante :

$$\varphi_1 = (180/\pi) \cdot (a/r_b) \cdot \sin \varphi_2 - \varphi_2$$

4

Fig. 1

0 131 537

Fig. 2

**Fig. 3**